# EUROPÄISCHE PATENTSCHRIFT

(11) **EP 3 747 151 B1**
(45) Veröffentlichungstag und Bekanntmachung des Hinweises auf die Patenterteilung: **26.10.2022**
(21) Anmeldenummer: 18704911.9
(22) Anmeldetag: 31.01.2018
(51) Int. Cl.: G06F 21/62, H04L 9/32, H04L 9/40, H04L 9/08, G06F 16/00, G06F 16/901

(54) **VERFAHREN ZUR GENERIERUNG METADATEN-FREIER BÄUME**
METHOD FOR GENERATING METADATA-FREE TREES
PROCÉDÉ POUR LA GÉNÉRATION D'ARBORESCENCES SANS MÉTADONNÉES

(43) Veröffentlichungstag der Anmeldung: 09.12.2020
(73) Patentinhaber: MyPrivacy GmbH, 1040 Wien (AT)
(72) Erfinder: TOPLAK, Erwin, 2521 Trumau (AT)
(74) Vertreter: Ellmeyer, Wolfgang
(86) Internationale Anmeldenummer: PCT/EP2018/052450
(87) Internationale Veröffentlichungsnummer: WO 2019/149360

(56) Entgegenhaltungen:
- DE-U1-202015 005 361
- US-A1- 2004 165 724
- SANDHU R S ET AL: "Cryptographic implementation of a tree hierarchy for access control", INFORMATION PROCESSING LETTERS, AMSTERDAM, NL, Bd. 27, Nr. 2, 29. Februar 1988 (1988-02-29), Seiten 95-98, XP002985386, ISSN: 0020-0190, DOI: 10.1016/0020-0190(88)90099-3

## Beschreibung

Die Erfindung betrifft ein Verfahren zur Generierung von durch geheime Knoten-Einstiegspunkte geschützten, metadaten-freien Bäumen, deren Kinder-Knoten vorzugsweise verschlüsselte Daten zugeordnet werden, wobei diese Kinder-Knoten und deren zugeordneten Daten auf einer nichtflüchtigen Speichervorrichtung in einer nichtvertrauenswürdigen Umgebung gespeichert werden, sodass ein Anwender rekursiv nur jene Kanten und Knoten von Bäume und deren Daten als solche erkennen und rekonstruieren kann, für welche er deren geheime Knoten-Einstiegspunkte als Binärfolge ausreichender Länge kennt.

Zugangsdaten können beispielsweise ein Benutzer und sein zugehöriges Kennwort sein, oder ein Token, welches von einer anderen Person übergeben wird oder vergleichbare Varianten, aus welchen eine Binärfolge mit hoher Entropie generiert werden kann.

Hierarchische Daten sind definiert als Satz von Datenelementen, die durch hierarchische Beziehungen miteinander verbunden sind. Hierarchische Beziehungen sind vorhanden, wenn ein Datenelement einem anderen Element übergeordnet ist. Beispiele für die hierarchischen Daten, die im Allgemeinen in Datenbanken gespeichert werden:
- Eine Organisationsstruktur
- Ein Dateisystem
- Eine Gruppe von Aufgaben in einem Projekt.
- Eine Taxonomie sprachlicher Termini
- Ein Diagramm der Links zwischen Webseiten
- Patienten und deren Krankheitsverlauf

In der Informatik ist ein Baum ein abstrakter Datentyp, bzw. eine Datenstruktur, die diesen abstrakten Datentyp implementiert und ein Objekt, mit dem sich hierarchische Strukturen abbilden lassen. Die durch die Hierarchie vorgegebenen Objekte nennt man Knoten. Typischerweise speichert jeder Knoten ausgehend von einem ersten Knoten, der Wurzel, eine Liste von Verweisen auf die ihn untergeordneten Knoten. Diese Verweise heißen Kanten. Einem Knoten untergeordnete Knoten werden auch dessen Kindern genannt, und der auf einen Knoten verweisende Knoten wird als Elternteil bezeichnet.

Bäume sind eine der am meisten verwendeten Datenstrukturen in der Informatik. Sie stellen eine bestimmte Teilmenge aller Graphen dar, nämlich jene, wo es genau einen Knoten mehr gibt als Kanten.

Ein Baum als Datenstruktur hat seinen Knoten Daten zugeordnet, welche strukturiert oder unstrukturiert sein können. In der vorliegenden Erfindung geht um derartige Bäume.

In der Praxis werden dauerhaft zu speichernde Bäume und deren zugeordneten Daten oft in Tabellen einer relationalen Datenbank abgelegt, wobei es mehrere Varianten gibt, welche auf jeweils unterschiedliche Anwendungsfälle ausgelegt sind.

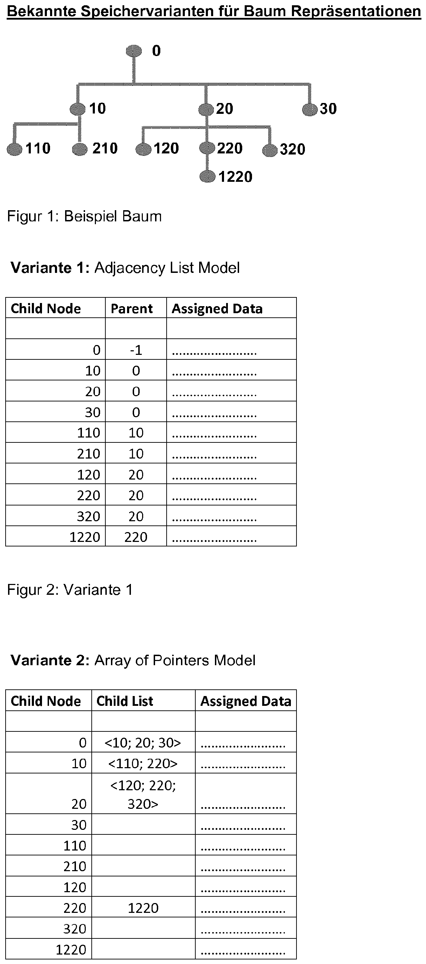

Diese Varianten werden in den Figuren 2 bis 10 dargestellt und beziehen sich alle auf den Baum in Figur 1. Für jede Variante gibt es wiederum Spezialisierungen und auch Kombinationen mit anderen Varianten, was aber nichts am Grundwesen ändert. Sämtliche Speichervarianten, die im Stand der Technik bekannt sind, können einer dieser Repräsentations-Varianten zugeordnet werden.

Oftmals werden in einer Tabelle mehrere in einer solchen Tabelle mehrere Bäume gespeichert, dann kann z.B. der eigentliche Wurzel-Knoten einen zusätzlichen Wurzel-Knoten übergeordnet bekommen, der einen konkreten Baum (beispielsweise eines Benutzers) als solches kennzeichnet. Alternativ kann - oftmals aus Performance-Gründen - auch eine weitere Spalte eingefügt werden, in welcher für jeden Knoten jeweils ein Wert für den Baum gespeichert wird. Hier gibt es in der Praxis viele verschiedene Möglichkeiten, die je nach Anwendungsfall sinnvoll eingesetzt werden.

Insgesamt haben alle diese Bäume gemeinsam, dass sie von ihrer Wurzel aus gänzlich rekonstruiert werden können. Dadurch ergeben sich zwangsweise Meta-Daten (deren konkrete Struktur, die Anzahl ihrer Knoten, die Tiefen von Knoten usw...) über Bäume, auch wenn deren zugeordnete Informationen verschlüsselt sind.

Der Anwendungsbereich der erfindungsgemäßen Bäume liegt in der Kryptographie, also der Verschlüsselung von Daten, Gewährleistung ihrer Authentizität und Integrität - und der bestmöglichen Vermeidung von Meta-Daten.

Im vorliegenden Dokument wird unter einer nicht-vertrauenswürdigen Umgebung zum Beispiel ein Cloud-Speicher verstanden, welchen zumindest der Server-Betreiber, aber mitunter auch Hacker jederzeit analysieren können. Ein Lese-Schutz kann daher nur dadurch gewährleistet werden, dass für den Datenzugriff einzig vom Eigentümer festgelegte Personen über geheime Knoten-Einstiegspunkte verfügen, aus denen sie den Baum erkennen, zusammenbauen und deren Daten entschlüsseln können.

Aus der US 2004/165724 A1 ist ein Verfahren zur Verschlüsselung hierarchischer Daten, die eine Baumstruktur aufweisen, bekannt, sodass diese in einer nicht-vertrauenswürdigenden Umgebung sicher gespeichert werden können. Das Verfahren verwendet eine Hash-Funktion, um für einen Knoten des Baums einen geheimen Schlüssel zu generieren, indem die Hash-Funktion auf einen Positionswert des Knotens und einen geheimen Schlüssel seines Eltern-Knotens angewandt wird. Der derart generierte Schlüssel wird schließlich verwendet, um die dem Knoten zugeordneten Daten zu verschlüsseln.

Wie in der vorliegenden Beschreibung erwähnt, gibt es im Stand der Technik bislang keine Möglichkeit, Bäume metadaten-frei zu speichern, insbesondere dann nicht, wenn in einer Tabelle eine Vielzahl von Bäumen abgelegt wird.

In Figur 1 wird ein Baum gezeigt, welcher in verschiedenen Varianten in einer Datenbank (oder einem Key-Value-Store) gespeichert werden kann.

In den Figuren 2 bis 10 wird der Baum aus Figur 1 mit den bekannten Speichervarianten in einer Tabelle gezeigt.

Ziel der Erfindung ist daher ein Verfahren zu zeigen, mittels welchem von der Wurzel ausgehend gerichtete Bäume (outbound directed trees), welchen Daten zugeordnet werden können, derart rekursiv erstellt werden können, dass es für jeden Knoten des Baumes einen geheimen Knoten-Einstiegspunkt gibt, von weichem aus der hierarchisch untergeordnete Teil des Baumes rekursiv weiter aufgebaut werden kann, aber keine Informationen über die Existenz von Geschwister oder Eltern gewonnen wird. (Metadaten frei).

Es wird ein Verfahren gezeigt, bei welchem auf der nichtflüchtigen Speichervorrichtung eine öffentliche Bäume-übergreifende Kinder-Knoten-Menge, bestehend aus pseudo-zufälligen Kinder-Knoten mit zugeordneten vorzugsweise verschlüsselten Daten von unterschiedlichen metadaten-freien Bäumen derart vorliegt, dass zwischen den jeweiligen Elementen keine mathematische oder anderwärtige Beziehung zueinander festzustellen ist.

Allgemein ist es eine der positiven Eigenschaften von Bäumen, dass Wurzel-Knoten gleich behandelt werden wie Kinder-Knoten, wodurch sich durch die rekursive Anwendbarkeit von Funktionen auf beliebige Knoten, unabhängig von deren Position im Baum, ergibt.

Im vorliegenden Dokument werden alle Kinder-Knoten, also auch der Wurzel-Knoten, aus geheimen Knoten-Einstiegspunkten berechnet, welche nicht direkt Teil des Baumes sind, aber ohne welcher kein Teil des Baumes festgestellt werden kann. Vielmehr kann nur jener Teil eines Baumes rekonstruiert werden, ob welchem ein geheimen Knoten-Einstiegspunkt bekannt ist. Es kann nicht festgestellt werden, ob es für einen geheimen Knoten-Einstiegspunkt Geschwister oder übergeordnete Knoten gibt. Aus einem Kinder-Knoten selbst können im Erfindungsgemäßen Verfahren keine Informationen abgeleitet werden, wodurch es möglich ist, diese zusammen mit vorzugsweise verschlüsselten Daten in einer nichtvertrauenswürdigen Umgebung zu speichern. Die geheimen Knoten-Einstiegspunkte werden immer zur Laufzeit neu berechnet, weshalb es keinen Vorteil bietet, diese dauerhaft zu speichern. Vielmehr hat eine dauerhafte Speicherung die Gefahr des Daten-Diebstahls oder der Zerstörung des gesamten Baumes.

Bei einem Verfahren zur Speicherung von durch Zugangsdaten geschützten hierarchischen Daten in einer nichtvertrauenswürdigen Umgebung, wobei für die Daten eindeutige Identifikationswerte von Kinder-Knoten zumindest eines zugehörigen Baumes bestimmt werden und diese zusammen mit den Daten gespeichert werden, wird dies erfindungsgemäß dadurch erreicht, dass aus den Zugangsdaten ein Wurzel-Knoten-Einstiegspunkt mittels einer vorbestimmbaren Berechnungsfunktion flüchtig berechnet wird, welcher einen geheimen Knoten-Einstiegspunkt darstellt und aus welchem nachfolgend der Identifikationswert eines Wurzel-Knotens des Baumes berechnet wird, welcher in diesem Baum einen der Kinder-Knoten darstellt, indem
zur Generierung der Identifikationswerte der Kinder-Knoten basierend auf einem der geheimen Knoten-Einstiegspunkte ein Kinder-Knoten-Generierungsschritt angewandt wird, in welchem zumindest:
   eine Kinder-Knoten-Nummerierungs-Menge erstellt oder herangezogen wird, die zumindest so viele unterschiedliche Elemente enthält, wie die Anzahl an zu generierenden Kinder-Knoten und welche für den flüchtigen geheimen Knoten-Einstiegspunkt rekonstruierbar ist,
   für den ersten und jeden weiteren benötigten Kind-Knoten jeweils eine kryptographische Hash-Funktion auf zumindest den flüchtigen geheimen Knoten-Einstiegspunkt und einen zuordenbaren Wert aus der Kinder-Knoten-Nummerierungs-Menge angewandt wird, und das Ergebnis der angewandten kryptographischen Hash-Funktion den jeweiligen Identifikationswert des Kind-Knoten repräsentiert,
   die derart berechneten Identifikationswerte der Kinder-Knoten zusammen mit deren zugeordneten, vorzugsweise verschlüsselten Daten einer Bäume-übergreifenden Kinder-Knoten-Menge auf einer nichtflüchtigen Speichervorrichtung in einer nichtvertrauenswürdigen Umgebung angefügt werden,
und dass die Kinder-Knoten des Baumes rekursiv um hierarchisch untergeordnete Kinder-Knoten erweiterbar sind, indem für diese jeweils geheime Knoten-Einstiegspunkte in einem Knoten-Einstiegspunkt-Generierungsschritt flüchtig dadurch berechnet werden, dass zumindest
   eine kryptographische Hash-Funktion auf zumindest jenen geheimen Knoten-Einstiegspunkt, aus welchem der Identifikationswert des um hierarchisch untergeordnete Kinder-Knoten zu erweiternde Kinder-Knoten berechnet wurde, und auf ebendiesen Identifikationswert angewandt wird,
   und nachfolgend für diese neu generierten flüchtigen geheimen Knoten-Einstiegspunkte der Kinder-Knoten-Generierungsschritt entsprechend rekursiv angewandt wird,
wobei die geheimen Knoten-Einstiegspunkte niemals auf einer nichtflüchtigen Speichervorrichtung abgelegt werden.

Unter einem Baum, welcher hierarchischen Daten zugehörig ist, wird ein Abstrakter Baum verstanden, welcher Identifikationswerte als Kinder-Knoten enthält und insgesamt eine Möglichkeit besteht, Daten beispielsweise Tabellarisch so zu speichern, dass die Hierarchie der Daten zu jedem Zeitpunkt abgeleitet und verarbeitet werden kann.

Derzeit können zwei der bekannten Varianten für diese Problemstellung verwendet werden, um Daten in einer Datenbank (oder einem Key-Value-Store) zu speichern.

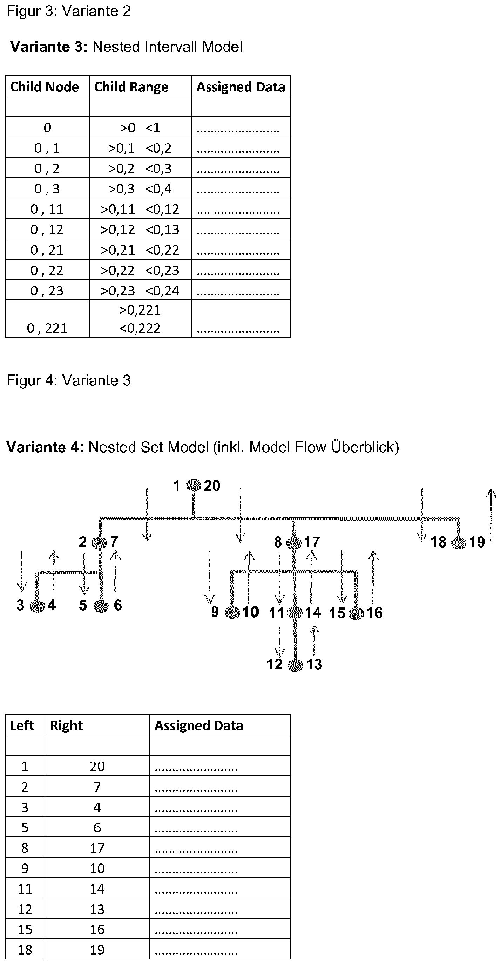

Variante 2 (Figur 3: Array of Pointers Model):
Es existiert eine Spalte mit Werten, welche einen Knoten eindeutig kennzeichnen, und eine weitere Spalte, welche eine Liste (oder ein Array) aller eindeutigen Knoten-Werte enthält, welche seine Kinder kennzeichnen. Diese Liste ist zumeist ein Binärfolgen-Array entweder fester oder variabler Länge. Ohne diese Liste and Kind-Knoten kann ein konkreter Baum nicht rekonstruiert werden. Wird diese Liste verschlüsselt, ist sichergestellt, dass nur Personen, die diesen Schlüssel und einen Knoten des Baumes kennen, den Baum ab dieser Stelle erzeugen können, ohne weitere Informationen zu gewinnen.

Nachteilig verhält sich dieses Model zur vorliegenden Erfindung insofern, als dass
- die Knoten-Werte in einer Liste gespeichert werden müssen (Speicherplatz), insbesondere, wenn Blöcke für die Kinder-Knotenliste mit fester Länge vorliegen (große Längen müssen gewählt werden, da die maximale Anzahl an Kindern für einen bestimmten Knoten nicht bekannt ist)
- immer geschrieben werden muss und je nach Verkettungsmethode -insbesondere beim Löschen eines Eintrages aus der Liste - teilweise oder gänzlich neu verschlüsselt werden (BSP. AES-CBC, AES-GCM)
- bei einer Variablen Blockgröße für die Kinder-Knotenliste Metadaten über die Anzahl an Kindern vorliegen und in diesem Fall das oftmalige Erweitern eines Blockes (z.B. viele Kinder) zu einer starken Fragmentierung auf der Speichervorrichtung führen
- der betreffende Teil eines Baumes und dessen Kinder zerstört sind, wenn eine Kind-Knotenliste korrumpiert ist
- der Baum nicht zur Schlüsselgenerierung verwendet werden kann, und damit entweder ein Generalschlüssel für alle Einträge von der Wurzel an zu verwenden ist (mit allen bekannten Nachteilen von Generalschlüsseln) oder für jede Kinder-Knoten-Liste ein Schlüssel zur Entschlüsselung der nächsten Kinder-Knoten-Liste ebenfalls verschlüsselt mitgespeichert wird. Dies hat als Nachteil, dass mehr Speicherplatz für jeden Block benötigt wird und eröffnet die Möglichkeit, dass diese Schlüssel von Unberechtigten gelesen oder korrumpiert werden
- die verschlüsselten Kind-Knoten-Blöcke immer dem Anwender zur Verfügung stehen müssen, also entsprechend von diesem geladen werden bzw. an diesen übertragen werden müssen.

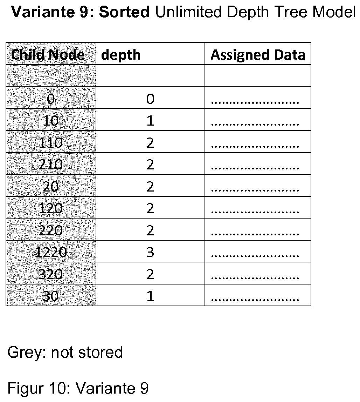

Variante 9 (Figur 10) gibt von sich aus viele Informationen Preis, selbst wenn die Tiefe der Knoten verschlüsselt ist - da es für jeden Eintrag die Information gibt, dass es sich entweder um einen Geschwister-, einen Kind- oder einen Eltern-Knoten für die nächste Ebene handelt.

Als Einstiegspunkt eines Baumes könnte in einer Erweiterung der verschlüsselte Wert der Tiefe dienen, was aber wiederum nur den Einstieg in den Root-Knoten ermöglichen würde, bzw mit einer sehr nachteiligen Anpassung könnte theoretisch jede Ebene als Einstiegsknoten verwendet werden. In jedem Fall bleibt aber ein gesamter Baum als solches erkennbar.

Außerdem ist diese Variante in der Praxis stark nachteilig, sobald in den Baum Konten eingefügt werden müssen, was ihre extrem seltene Verwendung erklärt. Aufgrund dieser praktischen Unbrauchbarkeit für den im Dokument genannten Anwendungsfalls wird nicht auf die weiteren Nachteile gegenüber der vorliegenden Erfindung eingegangen.

Variante 1 (Figur 2) kann zwar einen beliebigen Wert für ihre Kinder-Knoten verwenden, eine reine Verschlüsselung der Werte in der Parent-Spalte mit einem gleichen Schlüssel geben aber ebenfalls Informationen über die Baumstruktur preis. Weiters ist es möglich, durch den gesamten Baum zu navigieren, sofern der Schlüssel bekannt ist.

Die Varianten 3, 4, 5 und 8 (Figuren 4, 5, 6 und 9) erlauben aufgrund ihres Designs nicht die freie Wahl von Kinder-Knoten-Werten im Sinne von Zufallszahlen. Werden die Knoten-Werte verschlüsselt, durchaus mit einem anderen Schlüssel für jeden Baum, ist eine vollständige Entschlüsselung aller Zeilen in der Tabelle erforderlich, wobei nur jene Zeilen gewählt würden, welche als "gültig entschlüsselt" erkannt werden. Die entschlüsselten Daten sind aber nicht indiziert, was nochmals zu einem hohen Verlust an Performance und zu sehr viel Rechenaufwand auf Seite des Clients führen würde. Zuletzt ist es nicht das Ziel kryptographischer Systeme, einem Anwender die gesamten Daten aller Nutzer zu übergeben, selbst wenn es nicht an der Menge an Daten liegen würde.

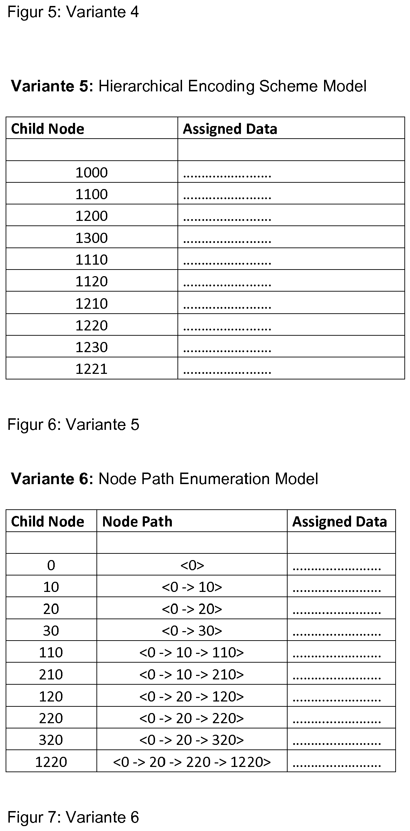

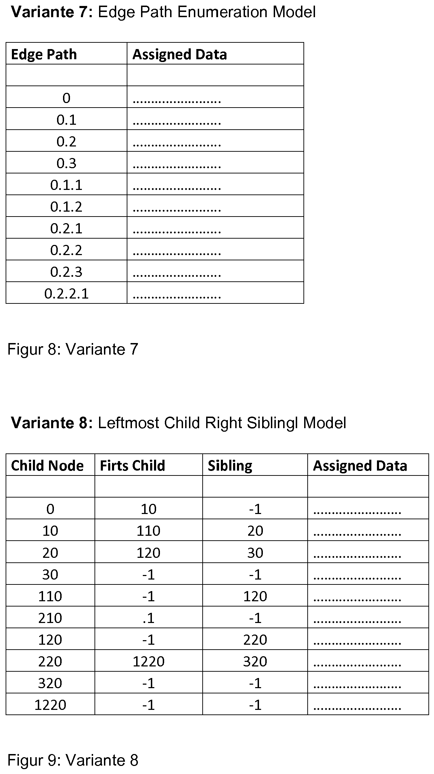

Die Varianten 6 und 7 (Figuren 7 und 8) sind für die vorliegende Anforderung ebenfalls ungeeignet, obwohl deren Kinder-Knoten frei wählbare Werte sind. Ein Entschlüsseln der Wurzel gibt keine Informationen über den Baum preis, was ebenfalls ein vollständiges Herunterladen und Entschlüsseln aller Daten notwendig machen würde. Weiteres würden die Nachteile von Variante 2 zusätzlich zum Tragen kommen.

Das Verfahren gemäß Anspruch 1 wurde speziell zum Lösen dieser Anforderung entworfen - ohne wesentliche Nachteile aufzuweisen:
Das Verfahren wird rekursiv angewandt und erfordert einzig das Übertragen der zugeordneten Informationen zu einem Kind-Knoten, aber keiner weiteren Schlüssel oder Listen von Kinder-Knoten oder ähnliches.

Das Verfahren erfordert in keinem Schritt die Verwendung von langsamen asymmetrischen Verschlüsselungsverfahren, deren Schlüssel noch dazu lang sind und nicht frei wählbar und entsprechend auch nicht zur Laufzeit berechnet werden können.

Das Verfahren erlaubt das Generieren beliebig vieler symmetrischer Schlüssel, wodurch diese niemals gespeichert und auch nicht von der Speichervorrichtung aus übertragen werden müssen.

Die verfahrensmäßig gespeicherten Kinder-Knoten weisen - aufgrund des rein berechneten Zwischenschrittes über die geheimen Knoten-Einstiegspunkte - keinen Bezug zueinander auf.

Im Verfahren werden geheime Knoten-Einstiegspunkte generiert, welche flüchtig sind, also niemals auf einer nichtflüchtigen Speichereinheit abgelegt werden. Vorzugsweise werden diese geheimen Knoten-Einstiegspunkte zur Laufzeit und im Arbeitsspeicher des Clients gehalten. Das gleiche gilt für die symmetrischen Kind-Knoten-Schlüssel und die Daten-Bearbeitungs-Berechtigungs-Basiswerte. Es steht dem Client frei, diese Werte aus Gründen der Performance lokal in einer verschlüsselten Datei zu speichern, werden aber Hash- und Verschlüsselungsalgorithmen der neuen Generation verwendet, ist deren Berechnungs-Overhead in Proportion zum Lesen der Daten von der nichtflüchtigen Speichervorrichtung marginal. Somit werden keine geheimen Informationen auf der Client-Seite oder anderswo gespeichert und können somit nicht von Dritten aus diesem Ausgelesen werden.

Der erfindungsgemäße Baum ermöglicht auch das Berechnen von symmetrischen Schlüsseln je Kind-Knoten, wodurch es sehr komfortabel möglich wird, nur einen Teil von einem beliebigen Kind-Knoten abwärts nur durch die Weitergabe des geheimen Knoten-Einstiegspunktes weiterzugeben. Dies wäre unter Verwendung eines Master-Keys nicht sinnvoll möglich, da dieser Master-Key ebenfalls weitergegeben werden müsste.

Hierfür ist eine mögliche Vorgehensweise, eine der schnelle 128-bit-Hashfunktion wie XXHash, MurmurHash, Highway-Hash usw auf den auf jeden geheimen Knoten-Einstiegspunkt anzuwenden, welcher aus dem zu entschlüsselnden Kind-Knoten generiert wird. Vorzugsweise kann eine variable oder konstante Zeichenfolge angehängt werden, wobei sich die Sicherheit des Verfahrens dadurch nicht unbedingt erhöht. Das Anhängen einer beschreibenden Zeichenfolge (z.B. "Schlüssel") erhöht die Übersicht im Code und erlaubt es, den geheimen Knoten-Einstiegspunkt mit einer anderen beschreibenden Zeichenfolge ebenfalls zu hashen und diesen Output für andere Funktionen zu verwenden.

Es ist nicht zwingend notwendig, eine kryptographische Funktion dafür anzuwenden, da für die erzeugten Schlüssel einzig dessen hohe Entropie wichtig ist (hauptsächlich gewährleistet durch die Bit-Unabhängigkeit), aber nicht deren Kollisions-Resistenz.

Wird eine kryptographische Hash-Funktion angewandt, kann vom Kind-Knoten-Schlüssel keinesfalls auf den geheimen Knoten-Einstiegspunkt gerechnet werden, und es besteht die Sicherheit, dass auch die Entropie für diesen nicht herabgesetzt wird.

Durch diese Erweiterung wird es einem Anwender ermöglicht, einen einzelnen Kind-Knoten und den zugehörigen Knoten-Schlüssel weiterzugeben und sicher zu sein, dass aus diesen beiden Informationen weder auf weitere Kinder-Knoten geschlossen werden kann noch dass ein beliebig anderer Kind-Knoten damit entschlüsselt werden kann.

Nachdem es im Erfindungsgemäßen Verfahren keine Benutzer und somit auch keine Notwendigkeit der Autorisierung geben muss, wird nun eine Möglichkeit gezeigt, um einen Schreibschutz im Falle der Weitergabe von geheimen Knoten-Einstiegspunkten zu gewährleisten:
Ein Schreibschutz wird dadurch erreicht, dass jedem Kinder-Knoten zusätzlich zu den ihm zugeordneten Daten ein frei wählbarer, aber ausreichend langer Daten-Bearbeitungs-Berechtigungswert zugeordnet wird,
und dass die nichtflüchtige Speichervorrichtung vor dem Speichern des Kind-Knotens eine vorzugsweise kryptographische Hash-Funktion auf zumindest den zugeordneten Daten-Bearbeitungs-Berechtigungswert anwendet, deren Ergebnis der Daten-Bearbeitungs-Berechtigungswert-Hash ist,
und falls sich dieser Kinder-Knoten nicht bereits auf der nichtflüchtigen Speichervorrichtung befindet, zumindest sowohl der Kinder-Knoten, die ihm zugeordneten Daten und sein Daten-Bearbeitungs-Berechtigungswert-Hash auf der Speichervorrichtung abgelegt werden,
und falls sich dieser Kinder-Knoten bereits auf der nichtflüchtigen Speichervorrichtung befindet, die dem Kinder-Knoten zugeordneten Daten nur dann überschrieben werden, wenn der dem Knoten mitgegebene Daten-Bearbeitungs-Berechtigungswert-Hash dem auf der Speichervorrichtung gespeicherten Daten-Bearbeitungs-Berechtigungswert-Hash entspricht

Da kryptographischen Hashwerte zur Identifikation von Kind-Knoten verwendet werden, ist es sowohl ausgeschlossen, dass ein Kind-Knoten von zwei unterschiedlichen Bäumen generiert wird (Kollisions-Resistenz) als auch, dass ein konkreter Kind-Knoten erraten wird (aufgrund des Möglichkeits-Raumes von 2^224 bit aufwärts). Somit kann die Person, welche einen Kind-Knoten als erster auf der nichtflüchtigen Speichervorrichtung ablegt, als der Eigentümer des Kind-Knotens angenommen werden. Der Eigentümer kann einen Wert heranziehen, welcher zum Beispiel als Hashwert aus dem Kind-Knoten und einem geheimen Wert, den nur er kennt, erstellt wird. Es kann aber jede beliebige andere Funktion mit beliebigen anderen Parametern verwendet werden, da dies für die zugrunde liege Schreib-Schutzfunktion keinen Unterschied macht. Sinnvollerweise ist es aber ein Wert, der vom Eigentümer berechnet werden kann, da dieser Wert dann nirgendwo abgelegt werden muss und daher auch nicht gestohlen werden kann.

Somit ist sichergestellt, dass nur der Eigentümer eines Kind-Knotens bzw. jene Personen, welche ebenfalls den Daten-Bearbeitungs-Berechtigungswert kennen, Daten verändern können, welche einem Kind-Knoten zugeordnet sind.

Dadurch, dass eine vorzugsweise kryptographische Hashfunktion auf den Daten-Bearbeitungs-Berechtigungswert angewandt wird, ist sichergestellt, dass eine Person, welche Zugriff auf den auf der nicht-vertrauenswürdigen Speichervorrichtung abgelegten Daten-Bearbeitungs-Berechtigungswert-Hash erlangt, nicht den eigentlichen Daten-Bearbeitungs-Berechtigungswert kennt und somit keine Veränderung an den Daten vornehmen kann.

Eine konkrete Ausführungsform ist, dass dieser Daten-Bearbeitungs-Berechtigungswert-Hash nur dann verändert werden kann, wenn der Eigentümer über einen geheimen Daten-Bearbeitungs-Berechtigungs-Basiswert verfügt, aus welchem er den Daten-Bearbeitungs-Berechtigungswert durch Anwendung einer kryptographischen Hashfunktion erhält. Die nichtflüchte Speichervorrichtung verändert den Daten-Bearbeitungs-Berechtigungswert-Hash nur dann, wenn ein Vergleich des kryptographischen Hashwertes des kryptographischen Hashwertes der Daten-Bearbeitungs-Berechtigungs-Basis gleich dem Daten-Bearbeitungs-Berechtigungswert-Hash ist.

Mit dieser Ausführungsform ist es einem Eigentümer möglich, einen Daten-Bearbeitungs-Berechtigungswert an Dritte weiterzugeben, damit diese Änderungen vornehmen können. Der Eigentümer hat aber durch diese Anwendungsform die Möglichkeit, den Schreibzugriff wieder zu entziehen, da einzig er den Daten-Bearbeitungs-Berechtigungs-Basiswert kennt und mit Kenntnis dieses Wertes den Daten-Bearbeitungs-Berechtigungswert-Hash auf der nichtflüchtigen Speichervorrichtung überschrieben kann.

Das Hinzufügen von konstanten Werten (Salt) zu diesen Werten ist möglich, erhöht aber die Sicherheit des Systems nicht. Trotzdem kann es aufgrund von Übersichtlichkeit sinnvoll sein, einen beschreibenden Text (z.b. "Daten-Bearbeitungs-Berechtigungswert") als Salt anzuhängen.

In einer bevorzugten Ausführungsform wird der den Daten-Bearbeitungs-Berechtigungs-Basiswert für Kinder-Knoten jeweils berechnet. Hierbei kann der Eigentümer eines Baumes ein Geheimnis z.B. aus dem ersten geheimen Knoten-Einstiegsgeheimnis generieren oder dieses anderwärtig erhalten. Dieses Geheimnis ist für den gesamten Baum gültig, und für jeden Kind-Knoten wird eine kryptographische Hash-Funktion auf das Geheimnis und den Kind-Knoten angewandt. Das Ergebnis dieser kryptographischen Hash-Funktion wird dann als Daten-Bearbeitungs-Berechtigungs-Basiswert für den jeweiligen Kind-Knoten verwendet. Dies ist eine Möglichkeit, die Verwendung von Salt bzw. das Hinzufügen geheimer Werte (wie z.B. den geheimen Knoteneinstiegspunkt) zum Hash ist möglich, erhöht aber die Sicherheit nur bedingt.

Zur Sicherstellung der Integrität und Authentizität der Daten, welche Kinder-Knoten zugeordnet sind, ist es sinnvoll, einen HMAC auf alle zusammengehörigen Werte, also den Kind-Knoten selbst und dessen zugeordneten Daten, mit dem Kind-Knoten-Schlüssel als Geheimnis anzuwenden.

Wird das Erfindungsgemäße Verfahren zum Beispiel zur Speicherung einer Verzeichnis- und Dateistruktur verwendet, ist es notwendig, jedem Kind-Knoten die Information zuzuordnen, ob es sich um eine Datei oder um ein Verzeichnis hat. Weiters kann es Kommentare oder einen Chat-Verlauf für Dateien oder ihren Änderungsverlauf geben. Dies ist ein Beispiel für Notwendigkeit, einen Knoten mit einem oder mehreren Attributen zu versehen.

Erfindungsgemäß wird dies vorzugsweise dadurch gelöst, dass eine Kinder-Knoten-Gruppen-Menge erstellt wird, deren Elemente Zeichenfolgen beliebiger Länge sind. Im Falle eines Dateisystems können die Elemente beispielsweise "Datei", "Verzeichnis", "Kommentar", "Chateintrag" sein.

Eine Variante hiervon ist, ein entsprechendes Element der Kinder-Knoten-Gruppen-Menge im Knoten-Einstiegspunkt-Generierungsschritt einbezogen wird, in diesem Fall würde ein Einbeziehen desselben oder anderen Elementes im Kinder-Knoten-Generierungsschritt keine Vorteile mehr bringen. In dieser Variante entstehen für jeden Kinder-Knoten eine Mehrzahl an geheimen Knoten-Einstiegspunkten, was je nach Anwendungsfall notwendig sein kann.

Die Kryptographische Hash-Funktion wird somit im Falle einer Datei in einem Verzeichnis (im Falle eines Kind-Knotens für einen Eltern-Knoten) die kryptographische Hash-Funktion auf folgenden Input angewandt, um den entsprechenden Kind-Knoten zu bekommen, wobei die Reihenfolge der Parameter insbesondere bei den heute verwendeten kryptographischen Funktionen keine wesentliche Rolle spielt:
Kryptographische Hashfunktion(geheimer Knoten-Einstiegspunkt + Kinder-Knoten-Nummerierungs-Eiement + "Datei" )

Analog gilt dies für Verzeichnisse und Kommentare und andere Gruppen:
Kryptographische Hashfunktion(geheimer Knoten-Einstiegspunkt + Kinder-Knoten-Nummerierungs-Element + "Verzeichnis" )
Kryptographische Hashfunktion(geheimer Knoten-Einstiegspunkt + Kinder-Knoten-Nummerierungs-Element + "Kommentar")

Somit lassen sich mit dem Erfindungsgemäßen Verfahren ohne Meta-Daten und ohne Verlust der Performance Kind-Knoten beliebigen Gruppen zuordnen. Dies ist dadurch gewährleistet, dass die Ausgabe einer kryptographischen Hashfunktion nie von einer Zufallszahl zu unterscheiden ist und immer die gleiche Ausgabelänge aufweist. Da kryptographische Hashfunktionen keine gleichen Ausgaben für beliebige Eingaben liefern, kann jeder Wert beliebiger Kinder-Knoten-Gruppen-Menge angefügt werden.

Die Aufgabe der Erfindung ist unter anderem das sichere, metadaten-freie Ablegen von Daten auf einer nicht-vertrauenswürdigen Speichervorrichtung. Nachdem die nichtflüchtige Speichervorrichtung keine Informationen darüber hat, für welchen Kind-Knoten es wie viele ihm untergeordnete, auf der nichtflüchtigen Speichervorrichtung abgelegte Kind-Knoten gibt, muss der Anwender die Existenz einzelner Kind-Knoten erfragen und kann aus der Antwort erschließen, ob es noch weitere Kind-Knoten gibt oder nicht.

Das kann dadurch erreicht werden, dass der Anwender eine Mehrzahl an Kind-Knoten durch das Verfahren berechnet und jeweils eine bestimmte Anzahl davon auf der nichtflüchtigen Speichervorrichtung sucht. Alternativ kann die Anzahl der Kind-Knoten für einen übergeordneten Kind-Knoten auch als Teil der Daten gespeichert und mitverschlüsselt werden, was aber nachteilig ist, da bei Hinzufügen eines Kind-Knotens die Daten des übergeordneten Kind-Knotens ebenfalls angepasst werden müssen. Geht man von einer großen Anzahl an Kind-Knoten aus und will man nur die Anzahl wissen, ist es auch möglich, Kind-Knoten in Intervallen abzufragen und sobald ein Intervall-Bereich festgestellt wurde, in diesem nach kleineren Intervallen zu suchen.

So können beispielsweise die Kind-Knoten 1000, 2000, 3000 bis 50.000 usw angefragt werden, und falls der Kind-Knoten 30.000 gefunden wird, aber der Kind-Knoten 31.000 nicht mehr, ist klar, dass es mindestens 30.000, aber maximal 30.999 Kinder-Knoten gibt und es können nun in 100-er Intervallen die Werte 30.001, 30.100, 30.200, 30.300 usw angefragt werden, solange, bis die Konkrete Anzahl feststeht.

Die Daten werden vorzugsweise in einer Key-Value-Datenbank abgelegt, wobei diese eine hoch-performante, nicht-kryptographische Hashfunktion anwenden. Dieser Schritt ist unnötig, das vom erfindungsgemäßen Verfahren bereits kollisionsfreie Zufallszahlen (aus Sicht der Speichervorrichtung) verwendet werden.

Daher ist es ebenso gleichwertig, die Daten in der Tabelle einer Datenbank abzulegen. In diesem Falle ist der Kind-Knoten in einer Spalte als Primärschlüssel definiert. Eine Fragmentierung des Index findet sehr langsam statt, da die gelieferten Kind-Knoten Zufallszahlen sind, und somit der Index-Baum sehr gut ausbalanciert bleibt. Auch das Suchen bestimmter Kind-Knoten über einen Index geht aufgrund der ausbalancierten Kind-Knoten-Werte schneller aus bei aufsteigenden Zahlen, welche eine sehr niedrige Entropie aufweisen.

Für die Ebenen-Knoten-Nummerierungs-Menge ist es vollkommend ausreichend, eine Schleife für eine Variable, welche bei einem vordefinierten, nicht geheimen Wert beginnt, bis zur Anzahl der gewünschten Kind-Knoten durchlaufen zulassen, wobei die Variable jeweils um den Wert Eins hochgezählt wird.

Die Sicherheit liegt in diesem Fall bereits beim geheimen Knoten-Einstiegspunkt, daher bringt es keine höhere Sicherheit, wenn die Werte der Ebenen-Knoten-Nummerierungs-Menge nur dem Eigentümer und von ihm ausgewählten Personen vertraut sind. Das Hinzufügen eines sich ändernden Wertes je zu erzeugenden Kind-Knotens dient nur dazu, dass für jeden Kind-Knoten ein neuer Knoten-Wert geniert wird, welcher auch bei Änderung von nur einem bit (was beim Hochzählen jedes zweite Mal der Fall ist, bsp. 00000010 -> 00000011) einen Zufallswert erzeugt, welcher sich vollkommen von den vorher erzeugten Zufallswerten unterscheidet. Dies ist durch die Verwendung von kryptographischen Hashfunktionen nachgewiesen gewährleistet, weshalb es keinen Grund gibt, eine komplexe oder geheime Funktion für das Erstellen der Ebenen-Knoten-Nummerierungs-Menge anzuwenden.

Wenn in den Ansprüchen und in der Beschreibung kryptographischen Hashfunktionen verwendet werden, sind die heute üblichen sicheren Hashfunktionen gemeint. Dies sind zumeist der SHA2, SHA3 oder Blake2, wobei eine andere Sichere Hashfunktion auch verwendet werden kann. Eine Kollisionsresistenz ist aber erforderlich, da alle Kinder-Knoten sämtlicher Bäume in der gleichen Tabelle bzw. Key-Value-Datei gespeichert werden.

Es ist weiters anzumerken, dass das Verfahren laut Anspruch 1 auch ein Symmentrisches Verschlüsselungsverfahren als kryptographischen Hash verwenden kann. Dies ist im Stand der Technik bereits bekannt (siehe Merkle-Damgård construction), im konkreten würde der geheime Konten-Einstiegspunkt als Schlüssel verwendet werden. In diesem Fall ist aber zu beachten, dass sowohl die Eingabe-Länge als auch die Ausgabe-Länge von symmetrischen Verschlüsselungs-Verfahren fest vorgegeben sind und mit 128bit nicht mehr den heutigen Sicherheitsstandards entsprechen. Die Verschlüsselung auf 2x128 bit anzuwenden stellt eine deutliche Verlangsamung gegenüber reinen kryptographischen Hash-Funktionen dar, es bieten sich aber im Gegenzug keine Vorteile.

Für die Verschlüsselung wird vorzugsweise der AES-256 genommen, wobei auch die geprüften Schlüssellängen 128bit und 196 aus Sicht der Sicherheit völlig ausreichen, und in der Performanz bis zu 40% schneller sind (aufgrund ihrer niedrigeren Rundenanzahl)

Natürlich ist es möglich, andere symmetrische Verschlüsselungsalgorithmen zu verwenden.

Die Sicherheit der vorliegenden Erfindung beruht vor allem auf der Verwendung von HMACs (keyed-hash message authentication code), wobei der Key bei der Wurzel ein dem Anwender bekannter Schlüssel ist und für alle weiteren Kinder ein berechneter Wert ist. Die Message ist entweder ein für jeden Kind-Knoten vordefinierter Wert (z.B. eine Nummerierung der Kind-Knoten) oder ein Kind-Knoten-Wert. Die Message kann in beiden Fällen mit weiteren Informationen angereichert werden, was die Sicherheit aber nicht erhöht.

In den üblichen Anwendungsfällen des HMAC einigen sich zwei Parteien auf ein gemeinsames Geheimnis (oft wird dieses gemeinsame Geheimnis aus einem Session-Key heraus generiert). Mit diesem Geheimnis werden Nachrichten authentifiziert und deren Konsistenz gewährleistet.

Der Unterschied der vorliegenden Erfindung zur reinen Verwendung von HMACs sind die konkret festgelegten Secrets und Messages, welche durch die rekursive Ausführung laut Anspruch 1 einen Baum berechnen lassen. Insbesondere besteht dieser Baum aus "geteilten" Kanten, was bedeutet, dass ein Eltern-Knoten nicht ohne Kenntnis des Eltern-Knoten-Geheimnisses seinen Kindern zugeordnet werden kann.

Es wird hervorgehoben, dass HMACs derzeit nur für Authentifizierungen und Integritätsprüfungen verwendet werden, indem zu überprüfende Daten mit einem Geheimnis gehasht werden, welches allen Berechtigten bekannt ist. Ist ein berechneter Wert gleich dem der Nachricht mitgegebenen Wert, kann die Nachricht aus Authentisch gesehen werden.

Für den Fachmann ist in keiner Weise naheliegend, HMACs zum Aufbau von Bäumen heranzuziehen, insbesondere nicht nach dem Verfahren laut Anspruch 1, welches mehr als nur die Verwendung von HMACs impliziert.

Da Merkle-Trees als kryptographische Bäume definiert sind, erfolgt auch eine Distanzierung von diesen, obwohl es keinen Anwendungsfall gibt, in welchem diesen Bäumen keine Daten zugeordnet werden können.

Merkle-Trees gehen von Dateien beliebiger Größe aus, welche in gleich große Blöcke unterteilt werden. Ziel des Merkle-Tree ist z.B. die Integrität und Konsistenz von Daten in verteilten Systemen zu gewährleisten. Um dies zu erreichen, wird ein gerichteter Baum rekursiv unter Verwendung von Hash-Werten aufgebaut, und das in Richtung mehrerer Blätter zur Wurzel.

Beim Merkle-Tree und dessen Erweiterungen und gängigen Anwendungsfällen gibt es weder die Möglichkeit noch den Bedarf, von der Wurzel aus in die Tiefe Knoten zu berechnen.

Selbst wenn man einem erweiterten Merkle-Tree zugrundelegt - (neue kryptographische Hashalgorithmen haben z.B. beliebig viele Kind-Knoten werden zu jeweils einem übergeordneten Knoten gehasht, die Knoten werden durchnummeriert, es könnte auch ein Geheimnis an die Knoten angehängt werden, ...) dient der Merkle-Tree der Kompression von Daten und der erfindungsgemäße Baum der Expansion.

Dies ist Gegenteilig zur vorliegenden Erfindung und nimmt somit ihren Grundgedanken in keiner Weise vorweg. Der durch die vorliegende Erfindung aufgebaute Baum kann unendlich in die Tiefe und in die Breite gehen, was beim Merkle-Tree nicht möglich ist. Weiters wird der Baum, wie in der Vorliegenden Erfindung beschrieben, durch einzig ein Geheimnis aufgebaut, was wiederum beim Merkle-Tree definitionsgemäß nicht möglich ist.

Als Beispiel werden zwei Bäume identische Bäume mit zwei unterschiedlichen geheimen Knoten-Einstiegspunkten nach dem erfindungsgemäßen Verfahren generiert und deren Speicherung in einer sortierten Liste wird gezeigt. Der Übersicht wegen wird der Baum aus Figur 1 aufgebaut. Konkret kann ein geheimer Wurzel-Konten-Einstiegspunkt ein nach PKCS#5-generierter Schlüssel aus der Kombination eines Benutzernamens und Passwort sein.

Der Einfachheit halber werden 144bit des SHA-256 als kryptographische Hashfunktion und als HMAC verwendet und die Werte werden im Base64-Format geschrieben. Die Kind-Knoten werden von 0 startend um den Wert 1 erhöht. Für die Verschlüsselung wird der AES-128 verwendet. Viele Funktionen verwenden SALT für die Veranschaulichung, wobei die Verwendung eines bestimmten SALT als einzigen Unterschied unterschiedliche Ausgabe-Werte liefert. Die zugeordneten Daten sind im Bespiel immer der Konstante String "TESTDATEN".

Die Reihenfolge der Parameter in den kryptographischen Hashfunktionen verändert den Ausgabewert gänzlich, ist aber für das Verfahren an sich nicht wesentlich.

### Beispielhafte Generierung der Indetifikationswerte der Kinder-Knoten

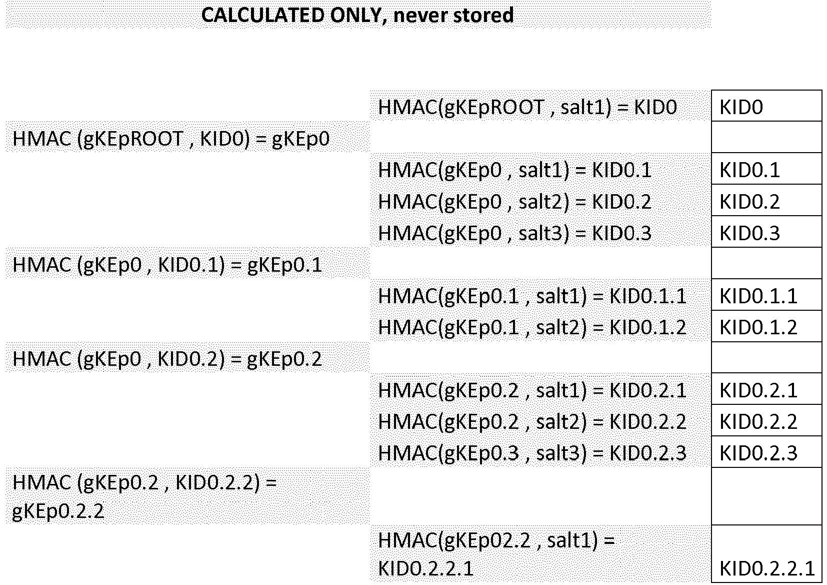

gKEp: geheimer Knoten Einstiegspunkt
KID: Knoten ID
HMAC: Hash-based message authentication code
salt: beliebige Zeichenfolge
Beispiel mit konkreten Werten - zweimal der Baum aus Figur 1, wobei zwei unterschiedliche Zugangsdaten (Baum1 , Baum2) und somit zwei unterschiedliche geheime Wurzel-Knoten-Einstiegspunkte verwendet werden.

| **Schritt** | **angewandte Funktion** | **Ergebniswert** | **SALT/WERT** |
|---|---|---|---|
| Geheimer Knoten-Einstiegspunkt des Baumes | SHA256( BAUM1) | yvkgxKWcNiFa9hvdFKN442wx | BAUM1 |
| Daten-Bearbeitungs-Berechtigungs-Basis-Geheimnis | SHA256( SHA256( BAUM1 )^{~}BEARBEIT ) | t0Ih1k9P9gKiCAw6IVN3VM+Q | ^{~}BEARBEIT |
| ***Knoten 0*** | **SHA256( Geheimer Knoten-Einstiegspunkt des Baumes ^{∼}gruppe1-kind0 )** | ***880MHNs0XtCDHJoMiLIkOCLY*** | ^{~}gruppe1-kind0 |
| Geheimer Knoten-Einstiegspunkt Knoten 0 | SHA256( Geheimer Knoten-Einstiegspunkt des Baumes ^{~}Knoten 0 ) | T/aw5FX37SGLoW3Fc1BmW7Pg | ^{~} |
| AES-Schlüssel Knoten 0 | SHA256( Geheimer Knoten-Einstiegspunkt Knoten 0^{~}AES_KEY ) | dXfZGrL6s3Lh9jx8fcdGoTSz | ^{~}AES_KEY |
| ***Zugeordnete Daten Knoten 0*** | AES128(TESTDATEN , AES-Schlüssel Knoten 0) | ***MTvEJ+AWTa*/*TxzRsB1hfWg==*** | TESTDATEN |
| ***Authentifizierung Knoten 0*** | HMAC(AES-Schlüssel Knoten 0 , Knoten 0^{~}Zugeordnete Daten Knoten 0) | ***I1qa59zm2danQX21IsGjF6oa*** | ^{~} |
| Daten-Bearbeitungs-Berechtigungs-Basiswert Knoten 0 | SHA256( Daten-Bearbeitungs-Berechtigungs-Basis-Geheimnis^{~}Knoten 0 ) | zExfuj8rbJ+aWXEZIrAw/EVb | ^{~} |
| Daten-Bearbeitungs-Berechtigungswert Knoten 0 | SHA256( Daten-Bearbeitungs-Berechtigungs-Basiswert Knoten 0 ) | Fn+hMn79m1vsSeIScE+jkJNG | |
| ***Daten-Bearbeitungs-Berechtigungswert** -* ***Hash Knoten 0*** | SHA256( Daten-Bearbeitungs-Berechtigungswert Knoten 0 ) | ***h*/*F6m*/*LunRAxVUITryXt6KWS*** | |
| ***Knoten 10*** | **SHA256( Geheimer Knoten-Einstiegspunkt Knoten 0^{~}gruppe1-kind0 )** | ***YA1c7U6ByZFuMIQchMcOYE7G*** | ^{~}gruppe1-kind0 |
| Geheimer Knoten-Einstiegspunkt Knoten 10 | SHA256( Geheimer Knoten-Einstiegspunkt Knoten 0^{~}Knoten 10 ) | vXeJwHWLzYdvSj+ejFK/NuA3 | ^{~} |
| AES-Schlüssel Knoten 10 | SHA256( Geheimer Knoten-Einstiegspunkt Knoten 10^{~}AES_KEY ) | FtT8Wxucgx019X9youmc4DdC | ^{~}AES_KEY |
| ***Zugeordnete Daten Knoten 10*** | AES128(TESTDATEN , AES-Schlüssel Knoten 10) | ***CDi4cB1ZnMrXT7Rwsn74eA==*** | TESTDATEN |
| ***Authentifizierung Knoten 10*** | HMAC(AES-Schlüssel Knoten 10, Knoten 10^{~}Zugeordnete Daten Knoten 10) | ***SC5h5zWY64Ms1rtAtg8Gh2Rm*** | ^{~} |
| Daten-Bearbeitungs-Berechtigungs-Basiswert Knoten 10 | SHA256( Daten-Bearbeitungs-Berechtigungs-Basis-Geheimnis^{~}Knoten 10 ) | ZHOg0U8GU8iiC5i5zTQbzU7I | ^{~} |
| Daten-Bearbeitungs-Berechtigungswert Knoten 10 | SHA256( Daten-Bearbeitungs-Berechtigungs-Basiswert Knoten 10 ) | zlW1/1FeNt6QE2KUxyzWDOtL | |
| ***Daten-Bearbeitungs-Berechtigungswert** -* ***Hash Knoten 10*** | SHA256( Daten-Bearbeitungs-Berechtigungswert Knoten 10 ) | ***1QJF3e3Akfi6cDqTiHKusVgY*** | |
| ***Knoten 110*** | **SHA256( Geheimer Knoten-Einstiegspunkt Knoten 10^{~}gruppe1-kind0 )** | ***WLV*/*Q4vtxDpP7NOi5B4mVBDI*** | ^{~}gruppe1-kind0 |
| Geheimer Knoten-Einstiegspunkt Knoten 110 | SHA256( Geheimer Knoten-Einstiegspunkt Knoten 10^{~}Knoten 110 ) | d3la5IJBcaaGPHpcvJrzEdpV | ^{~} |
| AES-Schlüssel Knoten 110 | SHA256( Geheimer Knoten-Einstiegspunkt Knoten 110^{~}AES_KEY ) | ATLDpyVF1tbcW8NzyE8mxZa+ | ^{~}AES_KEY |
| ***Zugeordnete Daten Knoten 110*** | AES128(TESTDATEN , AES-Schlüssel Knoten 110) | ***fdDmA441e25Bmg40YX9R9w==*** | TESTDATEN |
| ***Authentifizierung Knoten 110*** | HMAC(AES-Schlüssel Knoten 110 , Knoten 110^{~}Zugeordnete Daten Knoten 110) | ***jGeDwFRjUBNxjoxgs3Q2d*/*ly*** | ^{~} |
| Daten-Bearbeitungs-Berechtigungs-Basiswert Knoten 110 | SHA256( Daten-Bearbeitungs-Berechtigungs-Basis-Geheimnis^{~}Knoten 110 ) | jGaLVWO2HE+TMnWZFaf4Gxz9 | ^{~} |
| Daten-Bearbeitungs-Berechtigungswert Knoten 110 | SHA256( Daten-Bearbeitungs-Berechtigungs-Basiswert Knoten 110) | rQSi9YebhnGEAIouMQVXEcSb | |
| ***Daten-Bearbeitungs-Berechtigungswert** -* ***Hash Knoten 110*** | SHA256( Daten-Bearbeitungs-Berechtigungswert Knoten 110) | ***v8Ta5luidgdhV2tZSfMxuvFr*** | |
| ***Knoten 120*** | **SHA256( Geheimer Knoten-Einstiegspunkt Knoten 10^{~}gruppe1-kind1Knoten 120 )** | ***h0zrBvibp51Ig+XTz3W0p*/*VV*** | ^{~}gruppe1-kind1 |
| Geheimer Knoten-Einstiegspunkt Knoten 120 | SHA256( Geheimer Knoten-Einstiegspunkt Knoten 10^{~}Knoten 120 ) | TTUMd/cqRW4r2KTXj0QL5Sqm | ^{~} |
| AES-Schlüssel Knoten 120 | SHA256( Geheimer Knoten-Einstiegspunkt Knoten 120^{~}AES_KEY ) | oqtzhj8/zxAXwtPurPJ2UAlz | ^{~}AES_KEY |
| ***Zugeordnete Daten Knoten 120*** | AES128(TESTDATEN , AES-Schlüssel Knoten 120) | ***mMXvDN9wgIGEMDzUExoXmg==*** | TESTDATEN |
| ***Authentifizierung Knoten 120*** | HMAC(AES-Schlüssel Knoten 120 , Knoten 120^{~}Zugeordnete Daten Knoten 120) | ***LiB4mXrHQ1mHedt6V46y12mg*** | ^{~} |
| Daten-Bearbeitungs-Berechtigungs-Basiswert Knoten 120 | SHA256( Daten-Bearbeitungs-Berechtigungs-Basis-Geheimnis^{~}Knoten 120 ) | JkVbi5HqFxkGYJPqh5nfBSkd | ^{~} |
| Daten-Bearbeitungs-Berechtigungswert Knoten 120 | SHA256( Daten-Bearbeitungs-Berechtigungs-Basiswert Knoten 120 ) | wfihuO/MchcaMI5i3ZdXVTzg | |
| ***Daten-Bearbeitungs-Berechtigungswert** - **Hash Knoten** 120* | SHA256( Daten-Bearbeitungs-Berechtigungswert Knoten 120) | ***ZlayfyV71Dg4PeKM12F1IZwW*** | |
| ***Knoten 20*** | **SHA256( Geheimer Knoten-Einstiegspunkt Knoten 0^{~}gruppe1-kind1 )** | ***BLQXcSHIRHKg21uWhvLwV*/*RP*** | ^{~}gruppe1-kind1 |
| Geheimer Knoten-Einstiegspunkt Knoten 20 | SHA256( Geheimer Knoten-Einstiegspunkt Knoten 0^{~}Knoten 20 ) | WbVj+i4XEdr1QCz1DbdaiGZV | ^{~} |
| AES-Schlüssel Knoten 20 | SHA256( Geheimer Knoten-Einstiegspunkt Knoten 20^{~}AES_KEY ) | 1wKZ80CxcT9nkWu/6p4YrZBo | ^{~}AES_KEY |
| ***Zugeordnete Daten Knoten 20*** | AES128(TESTDATEN , AES-Schlüssel Knoten 20) | ***0hxIDZ*/*qDRxrk8vL+g*/*****r**Z**Q==*** | TESTDATEN |
| ***Authentifizierung Knoten 20*** | HMAC(AES-Schlüssel Knoten 20, Knoten 20^{~}Zugeordnete Daten Knoten 20) | ***NvZ9IyexSePN95E4FE*/*r2V0P*** | ^{~} |
| Daten-Bearbeitungs-Berechtigungs-Basiswert Knoten 20 | SHA256( Daten-Bearbeitungs-Berechtigungs-Basis-Geheimnis^{~}Knoten 20 ) | JaqzT2/diw0pV47gGlRnGZur | ^{~} |
| Daten-Bearbeitungs-Berechtigungswert Knoten 20 | SHA256( Daten-Bearbeitungs-Berechtigungs-Basiswert Knoten 20 ) | faRgDx8wcwpMr+n19by2TYH5 | |
| ***Daten-Bearbeitungs-Berechtigungswert** - **Hash Knoten** 20* | SHA256( Daten-Bearbeitungs-Berechtigungswert Knoten 20) | ***1NSfugXrUQVb+iYXoDvG16OI*** | |
| ***Knoten 120*** | **SHA256( Geheimer Knoten-Einstiegspunkt Knoten 20^{~}gruppe1-kind0 )** | ***59REPHrkLhOOt*/*B+b8fqPafY*** | ^{~}gruppe1-kind0 |
| Geheimer Knoten-Einstiegspunkt Knoten 120 | SHA256( Geheimer Knoten-Einstiegspunkt Knoten 20^{~}Knoten 120 ) | 7hfwX0u64LWxEgEhuGA349/Q | ^{~} |
| AES-Schlüssel Knoten 120 | SHA256( Geheimer Knoten-Einstiegspunkt Knoten 20^{~}AES_KEY ) | 3hz8p+gPh9sm6e0m3vNIoGVj | ^{~}AES_KEY |
| ***Zugeordnete Daten Knoten 120*** | AES128(TESTDATEN , AES-Schlüssel Knoten 120) | ***NZgjz65Kv5AmcDCdj5V*/*mw==*** | TESTDATEN |
| ***Authentifizierung Knoten 120*** | HMAC(AES-Schlüssel Knoten 120 , Knoten 120^{~}Zugeordnete Daten Knoten 120) | ***wcnw8KtH76Lpb8Cz1qR7svfQ*** | ^{~} |
| Daten-Bearbeitungs-Berechtigungs-Basiswert Knoten 120 | SHA256( Daten-Bearbeitungs-Berechtigungs-Basis-Geheimnis^{~}Knoten 120 ) | jeF8K8rpBtfRleyx3wIXkRVb | ^{~} |
| Daten-Bearbeitungs-Berechtigungswert Knoten 120 | SHA256( Daten-Bearbeitungs-Berechtigungs-Basiswert Knoten 120 ) | W9dTMbbUsnmOPZYxPDGg1UTy | |
| ***Daten-Bearbeitungs-Berechtigungswert - Hash Knoten 120*** | SHA256( Daten-Bearbeitungs-Berechtigungswert Knoten 120) | ***uFuTv4RxnZWKuXS4dctkP5aq*** | |
| ***Knoten 220*** | **SHA256( Geheimer Knoten-Einstiegspunkt Knoten 20^{~}gruppe1-kind1 )** | ***M3yDOcMJXfCAyUyGnFZn*/*JhD*** | ^{~}gruppe1-kind1 |
| Geheimer Knoten-Einstiegspunkt Knoten 220 | SHA256( Geheimer Knoten-Einstiegspunkt Knoten 20^{~}Knoten 220 ) | Juyt8fRPz+gDTQLI10Ge9OOe | ^{~} |
| AES-Schlüssel Knoten 220 | SHA256( Geheimer Knoten-Einstiegspunkt Knoten 120^{~}AES_KEY ) | D4N8DLKALEqiecAe5pgRPxNk | ^{~}AES_KEY |
| ***Zugeordnete Daten Knoten 220*** | AES128(TESTDATEN , AES-Schlüssel Knoten 220) | ***2tY3PBHk0hPMipc9h5RfEQ==*** | TESTDATEN |
| ***Authentifizierung Knoten 220*** | HMAC(AES-Schlüssel Knoten 220 , Knoten 220^{~}Zugeordnete Daten Knoten 220) | ***+eamzcStRQ4hblwla22Ufslg*** | ^{~} |
| Daten-Bearbeitungs-Berechtigungs-Basiswert Knoten 220 | SHA256( Daten-Bearbeitungs-Berechtigungs-Basis-Geheimnis^{~}Knoten 220 ) | P9zND7/SS9IGRpHZtcZH4/Xb | ^{~} |
| Daten-Bearbeitungs-Berechtigungswert Knoten 220 | SHA256( Daten-Bearbeitungs-Berechtigungs-Basiswert Knoten 220) | 0uzrhsnnzHdyOEJRCdkJG6OB | |
| ***Daten-Bearbeitungs-Berechtigungswert - Hash Knoten 220*** | SHA256( Daten-Bearbeitungs-Berechtigungswert Knoten 220 ) | ***idLYwip3nGJzdY6x2vAyYP0s*** | |
| ***Knoten 1220*** | **SHA256( Geheimer Knoten-Einstiegspunkt Knoten 220^{~}gruppe1-kind0 )** | ***f8aUCIKifl*/*grnzi8*/*KX2gsV*** | ^{~}gruppe1-kind0 |
| Geheimer Knoten-Einstiegspunkt Knoten 1220 | SHA256( Geheimer Knoten-Einstiegspunkt Knoten 220^{~}Knoten 1220) | l6N1tZPyFQ/IifbhFdnmWZYD | ^{~} |
| AES-Schlüssel Knoten 1220 | SHA256( Geheimer Knoten-Einstiegspunkt Knoten 220^{~}AES_KEY ) | ki1wxZJ6Oh0Pb3r4BJsCIACP | ^{~}AES_KEY |
| ***Zugeordnete Daten Knoten 1220*** | AES128(TESTDATEN , AES-Schlüssel Knoten 1220) | ***MWhrw3M9gZfs8nmpLgtbgg==*** | TESTDATEN |
| ***Authentifizierung Knoten 1220*** | HMAC(AES-Schlüssel Knoten 1220, Knoten 1220^{~}Zugeordnete Daten Knoten 1220) | ***qjuqk8R4spU6uAn4cGSvEZy+*** | ^{~} |
| Daten-Bearbeitungs-Berechtigungs-Basiswert Knoten 1220 | SHA256( Daten-Bearbeitungs-Berechtigungs-Basis-Geheimnis^{~}Knoten 1220) | +IZQayIkx9mkG0iKo72+wubX | ^{~} |
| Daten-Bearbeitungs-Berechtigungswert Knoten 1220 | SHA256( Daten-Bearbeitungs-Berechtigungs-Basiswert Knoten 1220) | gDF9mHY30JAYE1rK1od3youD | |
| ***Daten-Bearbeitungs-Berechtigungswert** -* ***Hash Knoten 1220*** | SHA256( Daten-Bearbeitungs-Berechtigungswert Knoten 1220) | *zZCWhn8BnnrtaHSZjogzixEy* | |
| ***Knoten 320*** | **SHA256( Geheimer Knoten-Einstiegspunkt Knoten 20^{~}gruppe1-kind0 )** | ***Nir*/*fLbvWOQqWE149ZioeDzy*** | ^{~}gruppe1-kind0 |
| Geheimer Knoten-Einstiegspunkt Knoten 320 | SHA256( Geheimer Knoten-Einstiegspunkt Knoten 20^{~}Knoten 320 ) | w812eLrr0vLi/gbP+xBDRAbt | ^{~} |
| AES-Schlüssel Knoten 320 | SHA256( Geheimer Knoten-Einstiegspunkt Knoten 1220^{~}AES_KEY ) | UZMng9o1s9PrpscJWakqunqO | ^{~}AES_KEY |
| ***Zugeordnete Daten Knoten 320*** | AES128(TESTDATEN , AES-Schlüssel Knoten 320) | ***LAw8VKZlkN6*/*XfTkPPjjnQ==*** | TESTDATEN |
| ***Authentifizierung Knoten 320*** | HMAC(AES-Schlüssel Knoten 320, Knoten 320^{~}Zugeordnete | ***e3olwSYwhwPsGTRnhWtZ1Msj*** | ^{~} |
| | Daten Knoten 320) | | |
| Daten-Bearbeitungs-Berechtigungs-Basiswert Knoten 320 | SHA256( Daten-Bearbeitungs-Berechtigungs-Basis-Geheimnis^{~}Knoten 320 ) | aHnhBHY4JqI+Iqxbi9exDWCb | ^{~} |
| Daten-Bearbeitungs-Berechtigungswert Knoten 320 | SHA256( Daten-Bearbeitungs-Berechtigungs-Basiswert Knoten 320 ) | Pod5CQTkCcCoiergyP0xxP/C | |
| ***Daten-Bearbeitungs-Berechtigungswert** -* ***Hash Knoten 320*** | SHA256( Daten-Bearbeitungs-Berechtigungswert Knoten 320 ) | ***EhZ8x6k3AOD+ZZLOhAZOF8GI*** | |
| ***Knoten 30*** | **SHA256( Geheimer Knoten-Einstiegspunkt Knoten 0^{~}gruppe1-kind2)** | ***mH2ZYvu1T5ZdpjQQR84qOR7m*** | ^{~}gruppe1-kind2 |
| Geheimer Knoten-Einstiegspunkt Knoten 30 | SHA256( Geheimer Knoten-Einstiegspunkt Knoten 0^{~}Knoten 30 ) | ObNZIjgRVBdkA+sthUigw/6n | ^{~} |
| AES-Schlüssel Knoten 30 | SHA256( Geheimer Knoten-Einstiegspunkt Knoten 320^{~}AES_KEY ) | d+8l7bq/6XrtFo0cMCg9pXIW | ^{~}AES_KEY |
| ***Zugeordnete Daten Knoten 30*** | AES128(TESTDATEN , AES-Schlüssel Knoten 30) | ***2zXSxReSrjX+pM1So8ptqg==*** | TESTDATEN |
| ***Authentifizierung Knoten 30*** | HMAC(AES-Schlüssel Knoten 30, Knoten 30^{~}Zugeordnete Daten Knoten 30) | ***egK*/*J3ydL8N0RgfST5*/*y+dAk*** | ^{~} |
| Daten-Bearbeitungs-Berechtigungs-Basiswert Knoten 30 | SHA256( Daten-Bearbeitungs-Berechtigungs-Basis-Geheimnis^{~}Knoten 30 ) | 4PvHHuuMHHBvbSVVI45R85dZ | ^{~} |
| Daten-Bearbeitungs-Berechtigungswert Knoten 30 | SHA256( Daten-Bearbeitungs-Berechtigungs-Basiswert Knoten 30 ) | +jDoipU/wFFWHNe1GRsXK20S | |
| ***Daten-Bearbeitungs-Berechtigungswert** -* ***Hash Knoten 30*** | SHA256( Daten-Bearbeitungs-Berechtigungswert Knoten 30) | ***Dc0POncKCQuwh8VBRzLKxbuf*** | |

Es werden die **fetten** Zeichen als Knoten-Identifiktionswerte zusammen mit den verschlüsselten Daten dauerhaft gespeichert, die linke Spalte dient nur der Erklärung. Es wird gezeigt, dass mehrere Bäume in der gleichen Bäume-übergreifenden Kinder-Knoten-Menge vorhanden sind.

| | |
|---|---|
| Baum1.K120 | **59REPHrkLhOOt/B+b8fqPafY** |
| Baum2.K10 | **75vHWovsJUPk582yzL8cRuIS** |
| Baum1.K0 | **880MHNs0XtCDHJoMiLIkOCLY** |
| Baum2.K20 | **93x7ONVNM/3qO4IterIF3zV6** |
| Baum1.K20 | **BLQXcSHIRHKg21uWhvLwV/RP** |
| Baum2.K30 | **f/qIcKUd8PIbwbmmxtFUuFyC** |
| Baum1.K1220 | **f8aUCIKifl/grnzi8/KX2gsV** |
| Baum1.K210 | **h0zrBvibp51Ig+XTz3W0p/VV** |
| Baum2.K1220 | **h4NKrDHXhrAS5yyihGYUCcCi** |
| Baum2.K0 | **kZo2SEb5u/3IFMD1Z5aJGcLS** |
| Baum2.K120 | **LbIpmI5iuo7RBjWxzaBJxpOv** |
| Baum1.K220 | **M3yDOcMJXfCAyUyGnFZn/JhD** |
| Baum1.K30 | **mH2ZYvu1T5ZdpjQQR84qOR7m** |
| Baum1.K320 | **Nir/fLbvWOQqWE149ZioeDzy** |
| Baum2.K110 | **ufEnS/5e0FohEd9/jSmootyf** |
| Baum2.K220 | **VCsH+WJ5wKa8IH5OsXfgekwm** |
| Baum2.K210 | **wJNVMuEqAG5MHqt4YMAvi6GP** |
| Baum1.K110 | **WLV/Q4vtxDpP7NOi5B4mVBDI** |
| Baum1.K10 | **YA1c7U6ByZFuMIQchMc0YE7G** |
| Baum2.K320 | **ygFLp9cAd0V+E6iBPxmYGMZy** |

## Patentansprüche

1. Verfahren zur Speicherung von durch Zugangsdaten geschützten hierarchischen Daten in einer nichtvertrauenswürdigen Umgebung, wobei für die Daten eindeutige Identifikationswerte von Kinder-Knoten zumindest eines zugehörigen Baumes bestimmt werden und diese zusammen mit den Daten gespeichert werden, **dadurch gekennzeichnet, dass**
aus den Zugangsdaten ein Wurzel-Knoten-Einstiegspunkt mittels einer vorbestimmbaren Berechnungsfunktion flüchtig berechnet wird, welcher einen geheimen Knoten-Einstiegspunkt darstellt und aus welchem nachfolgend der Identifikationswert eines Wurzel-Knotens des Baumes berechnet wird, welcher in diesem Baum einen der Kinder-Knoten darstellt, indem
zur Generierung der Identifikationswerte der Kinder-Knoten basierend auf einem der geheimen Knoten-Einstiegspunkte ein Kinder-Knoten-Generierungsschritt angewandt wird, in welchem zumindest:
eine Kinder-Knoten-Nummerierungs-Menge erstellt oder herangezogen wird, die zumindest so viele unterschiedliche Elemente enthält, wie die Anzahl an zu generierenden Kinder-Knoten und welche für den flüchtigen geheimen Knoten-Einstiegspunkt rekonstruierbar ist,
für den ersten und jeden weiteren benötigten Kinder-Knoten jeweils eine kryptographische Hash-Funktion auf zumindest den flüchtigen geheimen Knoten-Einstiegspunkt und einen zuordenbaren Wert aus der Kinder-Knoten-Nummerierungs-Menge angewandt wird, und das Ergebnis der angewandten kryptographischen Hash-Funktion den jeweiligen Identifikationswert des Kinder-Knotens repräsentiert,
die derart berechneten Identifikationswerte der Kinder-Knoten zusammen mit deren zugeordneten, vorzugsweise verschlüsselten Daten einer Bäume-übergreifenden Kinder-Knoten-Menge auf einer nichtflüchtigen Speichervorrichtung in einer nichtvertrauenswürdigen Umgebung angefügt werden
und dass die Kinder-Knoten des Baumes rekursiv um hierarchisch untergeordnete Kinder-Knoten erweiterbar sind, indem für diese jeweils geheime Knoten-Einstiegspunkte in einem Knoten-Einstiegspunkt-Generierungsschritt flüchtig dadurch berechnet werden, dass zumindest
eine kryptographische Hash-Funktion auf zumindest jenen geheimen Knoten-Einstiegspunkt, aus welchem der Identifikationswert des um hierarchisch untergeordnete Kinder-Knoten zu erweiternde Kinder-Knoten berechnet wurde, und
auf ebendiesen Identifikationswert angewandt wird,
und nachfolgend für diese neu generierten flüchtigen geheimen Knoten-Einstiegspunkte der Kinder-Knoten-Generierungsschritt entsprechend rekursiv angewandt wird,
wobei die geheimen Knoten-Einstiegspunkte niemals auf einer nichtflüchtigen Speichervorrichtung abgelegt werden.

2. Verfahren nach Anspruch 1, **dadurch gekennzeichnet, dass** zum Feststellen der Anzahl gespeicherter Kinder-Knoten für einen geheimen Knoten-Einstiegspunkt auf der nichtflüchtigen Speichereinrichtung eine Such-Kinder-Knoten-Liste mit einer vordefinierten Anzahl an Kinder-Knoten mittels des Kinder-Knoten-Generierungsschritt erstellt wird und diese Kinder-Knoten auf der nichtflüchtigen Speichervorrichtung gesucht werden,
und solange genau die vordefinierte Anzahl an Kinder-Knoten auf der nichtflüchtigen Speichervorrichtung gefunden wird, eine weitere Such-Kinder-Knoten-Liste mit dieser vordefinierten Anzahl an Kinder-Knoten durch Anwendung des Kinder-Knoten-Generierungsschritt erstellt wird, welche die vorigen Such-Kinder-Knoten-Listen fortsetzt, und diese Kinder-Knoten ebenfalls auf der nichtflüchtigen Speichervorrichtung gesucht werden, und die Anzahl an Kinder-Knoten um diese vordefinierte Anzahl erhöht wird
und sobald die vordefinierte Anzahl an Kinder-Knoten nicht auf der nichtflüchtigen Speichervorrichtung gefunden wird, die Anzahl der Kinder-Knoten um die Anzahl der aufgefundenen Kinder-Knoten auf der nichtflüchtigen Speichervorrichtung erhöht wird und somit die tatsächliche Anzahl feststeht.

3. Verfahren nach Anspruch 1 oder 2, **dadurch gekennzeichnet, dass** die Daten, welche Kinder-Knoten zugeordnet werden, mit einem symmetrischen Verfahren verschlüsselt werden, wobei für jeden Kinder-Knoten ein unterschiedlicher Kinder-Knoten-Schlüssel wie folgt berechnet wird:
Anwenden einer ausreichend sicheren Funktion auf zumindest jenen geheimein Knoten-Einstiegspunkt, der durch Anwendung des Knoten-Einstiegspunkt-Generierungsschrittes auf den jeweiligen Kinder-Knoten generiert wird, wobei der binäre Ausgabewert dieser Funktion der benötigten Schlüssellänge entspricht.

4. Verfahren nach Anspruch 3, **dadurch gekennzeichnet, dass** als ausreichend sicheren Funktion eine kryptographische Hash-Funktion angewandt wird, wodurch die Kenntnis von nur eines Kinder-Knotens und dessen Knoten-Schlüssel einzig ermöglichen, die Daten des bekannten Kinder-Knoten zu entschlüsseln, aber es nicht möglich ist, auf weitere Kinder-Knoten oder deren verschlüsselten Daten zu kommen,

5. Verfahren nach einem der vorherigen Ansprüche, **dadurch gekennzeichnet, dass** zur Sicherstellung der Integrität und Authentizität der vorzugsweise verschlüsselten Daten, welche den jeweiligen Kinder-Knoten eines Baumes zugeordnet sind, ein kryptographischer Prüfwert zu dem Kinder-Knoten gespeichert wird, welcher zumindest unter Verwendung des Kinder-Knotens, dessen zugeordneten Daten und dessen Kinder-Knoten-Schlüssels generiert wird, wobei hierfür vorzugsweise ein Keyed-Hash-Massage-Authentication-Code (HMAC) als Verfahren verwendet wird.

6. Verfahren nach einem der Ansprüche 1 bis 5, **dadurch gekennzeichnet, dass** zur Speicherung der Bäume-übergreifenden Kinder-Knoten-Menge, welche zumindest Kinder-Knoten und deren zugeordneten Daten enthält, auf der nichtflüchtigen Speichervorrichtung eine Schlüssel-Wert-Datenbank (key-valuedatabase) verwendet wird.

7. Verfahren nach einem der Ansprüche 1 bis 5, **dadurch gekennzeichnet, dass** zur Speicherung der Bäume-übergreifenden Kinder-Knoten-Menge, welche zumindest Kinder-Knoten und deren zugeordneten Daten enthält, auf der nichtflüchtigen Speichervorrichtung eine Tabelle in einer Datenbank verwendet wird, welche Tabelle zumindest einen Unique-Index für die Spalte aufweist, welche die Kinder-Knoten speichert.

8. Verfahren nach einem der vorhergehenden Ansprüche, **dadurch gekennzeichnet, dass** die Kinder-Knoten-Nummerierungs-Menge durch eine Funktion gebildet wird, die eine vordefinierte Zahl, vorzugsweise die Zahl 0, als erstes Element nimmt und jedes weitere Element dieser Menge die vorherige Zahl um einen vordefinierten Zählwert, vorzugsweise den Wert 1, erhöht.

9. Verfahren nach einem der vorherigen Ansprüche, **dadurch gekennzeichnet, dass** jedem Kinder-Knoten zusätzlich zu den ihm zugeordneten Daten ein frei wählbarer, aber ausreichend langer Daten-Bearbeitungs-Berechtigungswert zugeordnet wird,
und dass die nichtflüchtige Speichervorrichtung vor dem Speichern des Kinder-Knotens eine vorzugsweise kryptographische Hash-Funktion auf zumindest den zugeordneten Daten-Bearbeitungs-Berechtigungswert anwendet, deren Ergebnis der Daten-Bearbeitungs-Berechtigungswert-Hash ist,
und falls sich dieser Kinder-Knoten nicht bereits auf der nichtflüchtigen Speichervorrichtung befindet, zumindest sowohl der Kinder-Knoten, die ihm zugeordneten Daten und sein Daten-Bearbeitungs-Berechtigungswert-Hash auf der Speichervorrichtung abgelegt werden,
und falls sich dieser Kinder-Knoten bereits auf der nichtflüchtigen Speichervorrichtung befindet, die dem Kinder-Knoten zugeordneten Daten nur dann überschrieben werden, wenn ein dem Knoten mitgegebener Daten-Bearbeitungs-Berechtigungswert-Hash dem auf der Speichervorrichtung gespeicherten Daten-Bearbeitungs-Berechtigungswert-Hash entspricht,

10. Verfahren nach Anspruch 9, **dadurch gekennzeichnet, dass** der Daten-Bearbeitungs-Berechtigungswert-Hash eines Kinder-Knotens von der Speichervorrichtung nur dann auf einen neuen Daten-Bearbeitungs-Berechtigungswert-Hash geändert wird, wenn dem Kinder-Knoten zusätzlich ein Daten-Bearbeitungs-Berechtigungs-Basiswert mitgegeben wird, von welchem der kryptographische Hash dem Daten-Bearbeitungs-Berechtigungswert des Kinder-Knotens entspricht.

11. Verfahren nach einem der vorherigen Ansprüche, **dadurch gekennzeichnet, dass** eine Kinder-Knoten-Gruppen-Menge erstellt wird, deren Elemente Zeichenfolgen beliebiger Länge sind und dass im Kinder-Knoten-Generierungsschritt die kryptographische Hash-Funktion zusätzlich auf jenes Element der Kinder-Knoten-Gruppen-Menge angewandt wird, das der Gruppe entspricht, in welche der Kinder-Knoten eingeordnet werden soll.

## Claims

1. A method for storing hierarchical data protected by access data in an untrustworthy environment, wherein unique identification values of child nodes of at least one associated tree are determined for the data and are stored together with said data, **characterized in that**
a root node entry point is calculated based on the access data by means of a predeterminable calculation function in a volatile way, said root node entry point representing a secret node entry point from which the identification value of a root node of the tree is subsequently calculated, said root node representing one of the child nodes in this tree, by
applying a child node generation step to generate the identification values of the child nodes based on one of the secret node entry points, in which at least:
a child node numbering set is created or used, which contains at least as many different elements as the number of child nodes to be generated and which can be reconstructed for the volatile secret node entry point,
for the first and each further required child node, a cryptographic hash function is applied to at least the volatile secret node entry point and an assignable value from the child node numbering set, the result of the applied cryptographic hash function representing the respective identification value of the child node,
the identification values of the child nodes calculated in this way, together with their associated, preferably encrypted, data are added to a tree-spanning set of child nodes on a non-volatile storage device in an untrustworthy environment,
and **in that** the child nodes of the tree are recursively expandable by hierarchically subordinate child nodes, by calculating secret node entry points for each of these child nodes in a node entry point generation step in a volatile manner in which at least
a cryptographic hash function is applied to at least that secret node entry point from which the child node to be expanded by hierarchically subordinate child nodes was calculated, and to the identification value of the very same child node,
and subsequently the child node generation step is recursively applied to these newly generated volatile secret node entry points,
wherein said secret node entry points being never stored on any non-volatile storage device.

2. The method according to claim 1, **characterized in that,** for determining the number of stored child nodes for a secret child node entry point on the non-volatile storage device, a search child node list with a predefined number of child nodes is created in said child node generation step, and these child nodes are searched on the non-volatile storage device,
and as long as exactly the predefined number of child nodes is found on the non-volatile storage device a further search child node list with this predefined number of child nodes is created by applying the child node generation step, said list continuing the previous search child node lists, and these child nodes are also searched on the non-volatile storage device, and the number of child nodes is increased by this predefined number,
and as soon as the predefined number of child nodes is not found on the non-volatile storage device the number of child nodes is increased by the number of child nodes found on the non-volatile storage device and thus defining the actual number.

3. The method according to claim 1 or 2, **characterized in that** the data assigned to child nodes is encrypted using a symmetric method, wherein a different child node key is calculated for each child node as follows:
applying a sufficiently secure function to at least that secret node entry point generated by applying the node entry point generation step to the respective child node, the binary output value of this function corresponding to the required key length.

4. The method according to claim 3, **characterized in that** a cryptographic hash function is used as said sufficiently secure function, whereby only knowing only one child node and its node key makes it possible to decrypt the data of the known child node, without making it possible to get to further child nodes or their encrypted data.

5. The method according to any one of the preceding claims, **characterized in that,** to ensure the integrity and authenticity of the preferably encrypted data associated with the respective child nodes of a tree, a cryptographic check value is stored together with the child node, which is generated using at least the child node, its associated data and its child node key, preferably wherein as the method for this a Keyed Hash Message Authentication Code (HMAC) is used.

6. The method according to any one of the claims 1 to 5, **characterized in that** a key value database is used for storing the tree-spanning child node set, containing at least child nodes and their associated data, on the non-volatile storage device.

7. The method according to any one of the claims 1 to 5, **characterized in that,** for storing the tree-spanning child node set, containing at least child nodes and their associated data, on the non-volatile storage device, a table in a database is used, said table having a unique index at least for the column in which the child nodes are stored.

8. The method according to any one of the preceding claims, **characterized in that** the child node numbering set is formed by a function that defines a predefined number, preferably the number 0, as a first element and every further element of this set increases the previous number by a predefined count value, preferably by the value 1.

9. The method according to any one of the preceding claims, **characterized in that** a freely selectable, but sufficiently long data editing authorization value is assigned to every child node in addition to data assigned to it,
and **in that**, before storing the child node, the non-volatile storage device applies a preferably cryptographic hash function to at least the associated data editing authorization value which results in a data editing authorization value hash,
and if that child node is not already on the non-volatile storage device, at least the child node, its associated data as well as its data editing authorization value hash are stored on the storage device,
and if this child node is already located on the non-volatile storage device, the data associated with the child node is only overwritten if the data editing authorization value hash provided together with the node matches the data editing authorization value hash stored on the storage device.

10. The method according to claim 9, **characterized in that** the data editing authorization value hash of a child node from the storage device is changed to a new data editing authorization value hash only if the child node is additionally provided with a data editing authorization base value whose cryptographic hash corresponds to the data editing authorization value of the child node.

11. The method according to any one of the preceding claims, **characterized in that** a child node group set is created, the elements of which are character strings of arbitrary length, and **in that**, in the child node generation step, the cryptographic hash function is additionally applied to that element of the child node group set which corresponds to the group to which the child node is to be assigned.

## Revendications

1. Procédé pour stocker des données hiérarchiques, protégées par des données d'accès, dans un environnement non fiable, des valeurs d'identification uniques de nœuds fils d'au moins un arbre correspondant étant définies pour les données et stockées avec les données, **caractérisé en ce que**
un point d'entrée nœud racine est calculé de façon volatile à partir des données d'accès en appliquant une fonction de calcul susceptible à être prédéterminée, le point d'entrée nœud racine représentant un point d'entrée nœud secret, à partir duquel est ensuite calculée la valeur d'identification d'un point nœud de l'arbre, qui dans cet arbre représente un des nœuds fils,
en mettant en œuvre une étape de génération de nœud fils pour générer les valeurs d'identification des nœuds fils sur la base d'un des points nœuds secrets, dans laquelle :
un ensemble de numérotation de nœuds fils est créé ou utilisé, ayant au moins autant d'éléments différents que le nombre de nœuds fils à générer et qui peut être reconstitué pour le point d'entrée nœud volatil secret,
pour le premier et chaque autre nœud fils nécessaire une fonction cryptographique de hachage est appliquée au moins au point d'entrée nœud volatil secret et une valeur associable parmi l'ensemble de numérotation de nœuds fils, le résultat de la fonction cryptographique de hachage appliquée représentant la valeur respective d'identification du nœud fils,
les valeurs d'identification des nœuds fils ainsi calculées sont ajoutées sur un dispositif de mémoire non volatile dans un environnement non fiable avec leurs données associées, de préférence cryptées, d'un ensemble de nœuds fils appartenant à différents arbres,
et **en ce qu'**il est possible d'ajouter de manière récursive aux nœuds fils de l'arbre des nœuds fils hiérarchiquement inférieurs en calculant pour ceux-ci de façon volatile des points d'entrée secrets dans une étape de génération de point d'entrée nœud,
en appliquant une fonction de hachage cryptographique au moins à ce point d'entrée nœud secret, à partir duquel la valeur d'identification du nœud fils, auquel les nœuds fils hiérarchiquement inférieurs sont censés être ajoutés, a été calculée, ainsi qu'à ladite valeur d'identification même,
et en soumettant de manière récursive ces points d'entrée nœud volatils secrets, générés à nouveau, à l'étape de génération de nœuds fils,
les points d'entrée nœud secrets n'étant jamais déposés sur un dispositif de mémoire non volatile.

2. Procédé selon la revendication 1, **caractérisé en ce que** pour identifier le nombre de nœuds fils pour un point d'entrée fils secret sur le dispositif de mémoire non volatile est créée une liste de recherche de nœuds fils avec un nombre prédéfini de nœuds fils en mettant en œuvre l'étape de génération de nœuds fils et **en ce que** ces nœuds fils sont soumis à une recherche sur le dispositif de mémoire non volatile,
et **en ce que** tant qu'exactement le nombre prédéfini de nœuds fils est trouvé sur le dispositif de mémoire non volatile, une nouvelle liste de recherche de nœuds fils avec ce nombre prédéfini de nœuds fils, qui continue les listes de recherche de nœuds fils précédentes, est créé par l'étape de génération de nœuds fils, et **en ce que** ces nœuds fils sont à leur tour soumis à une recherche sur le dispositif de mémoire non volatile et **en ce que** le nombre de nœuds fils est augmenté de ce nombre prédéfini,
et **en ce que** si le nombre prédéfini de nœuds fils n'est pas trouvé sur le dispositif de mémoire non volatile, le nombre de nœuds fils est augmenté du nombre des nœuds fils trouvés sur le dispositif de mémoire non volatile, permettant d'identifier le nombre effectif.

3. Procédé selon les revendications 1 ou 2, **caractérisé en ce que** les données associées aux nœuds fils sont cryptées par un procédé symétrique, une clé nœud fils différente étant calculée fils de la manière suivante pour chaque nœud :
application d'une fonction suffisamment sûre au moins à ce point d'entrée nœud secret, qui est créé par l'étape de génération de point d'entrée nœud, la valeur binaire de sortie de cette fonction correspondant à la longueur nécessaire de la clé.

4. Procédé selon la revendication 3, **caractérisé en ce que** comme fonction suffisamment sûre est appliquée une fonction de hachage cryptographique, grâce à quoi la connaissance d'un seul nœud fils et sa clé nœud permettent uniquement de décrypter les données du nœud fils connu, sans permettre d'identifier d'autres nœuds fils ou leur données cryptées.

5. Procédé selon l'une des revendications précédentes, **caractérisé en ce que** pour assurer l'intégrité et l'authenticité des données de préférence cryptées, associées aux nœuds fils respectifs d'un arbre, est stockée une valeur de vérification cryptographique pour ce nœud fils, générée en utilisant au moins le nœud fils, ses données associées et sa clé de nœud fils, de préférence appliquant comme procédé un code d'authentification de message de hachage à clé (HMAC).

6. Procédé selon l'une quelconque des revendications 1 à 5, **caractérisé en ce que** pour stocker l'ensemble de nœuds fils appartenant à différents arbres, contenant au moins les nœuds fils et leurs données associées, sur le dispositif de mémoire non volatile est utilisée une base de données clé-valeur.

7. Procédé selon l'une quelconque des revendications 1 à 5, **caractérisé en ce que** pour stocker l'ensemble de nœuds fils appartenant à différents arbres, contenant au moins les nœuds fils et leurs données associées, sur le dispositif de mémoire non volatile est utilisé un tableau dans une base de données, ledit tableau ayant au moins un index d'unicité pour la colonne qui stocke les nœuds fils.

8. Procédé selon l'une quelconque des revendications précédentes, **caractérisé en ce que** l'ensemble de numérotation de nœuds fils est formé par une fonction, qui se sert d'un chiffre prédéfini, de préférence le chiffre 0, comme premier élément et **en ce que** chaque élément suivant de cet ensemble augmente le chiffre précédent d'une valeur numérique prédéfinie, de préférence la valeur 1.

9. Procédé selon l'une quelconque des revendications précédentes, **caractérisé en ce qu'**une valeur librement sélectionnable, mais suffisamment longue, d'autorisation au traitement de données est associée à chaque nœud fils en plus des données associées à celui-ci
et **en ce que** le dispositif de mémoire non volatile applique, avant le stockage du nœud fils, une fonction de hachage, de préférence cryptographique, sur au moins la valeur d'autorisation au traitement de données, le résultat de la fonction étant le hachage de valeur d'autorisation au traitement de données
et **en ce que**, si ce nœud fils ne se trouve pas encore sur le dispositif de mémoire non volatile, au moins le nœud fils, ses données associées et son hachage de valeur d'autorisation au traitement de données sont déposés sur le dispositif de mémoire
et **en ce que**, si ce nœud fils se trouve déjà sur le dispositif de mémoire non volatile, les données associées au nœud fils sont écrasées uniquement dans le cas où un hachage de valeur d'autorisation au traitement de données ajouté au nœud correspond au hachage de valeur d'autorisation au traitement de données stocké sur le dispositif de mémoire.

10. Procédé selon la revendication 9, **caractérisé en ce que** le dispositif de mémoire remplace le hachage de valeur d'autorisation au traitement de données d'un nœud fils par un autre hachage de valeur d'autorisation au traitement de données uniquement dans le cas où une valeur de base d'autorisation au traitement de données, dont le hachage cryptographique correspond à la valeur d'autorisation au traitement de données du nœud fils, est ajoutée en plus au nœud fils.

11. Procédé selon l'une quelconque des revendications précédentes, **caractérisé en ce qu'**un ensemble d'un groupe de nœud fils, dont les éléments sont des chaînes de charactères de n'importe quelle longueur, est créé et **en ce que** dans l'étape de génération de nœud fils une fonction de hachage cryptographique est en plus appliquée sur l'élément de l'ensemble du groupe de nœud fils, qui correspond au groupe auquel le nœud fils est censé être attribué.
